# EUROPÄISCHE PATENTANMELDUNG

(11) **EP 1 078 842 A2**
(43) Veröffentlichungstag der Anmeldung: **28.02.2001**
(21) Anmeldenummer: 00117758.3
(22) Anmeldetag: 18.08.2000
(51) Int. Cl.: B62B 9/20

(54) **Schiebebügel für einen Kinderwagen**

(30) Priorität: 19.08.1999 DE 29914259 U
(71) Anmelder: BRITAX-TEUTONIA KINDERWAGENFABRIK GmbH, D-32120 Hiddenhausen (DE)
(72) Erfinder: Nowak, Hartmut, 33154 Salzkotten (DE)
(74) Vertreter: Loesenbeck, Karl-Otto, Dipl.-Ing.

(57) **Zusammenfassung**

Ein Kinderwagen mit einem Fahrgestell und einem am Fahrgestell angeordneten U-förmigen Schiebebügel soll so gestaltet werden, zur Anpassung an unterschiedliche Größen der schiebenden Personen, das Mittelteil des U-förmigen Schiebebügels sowie die Lage gegenüber der zugehörigen Radachse einstellbar ist.

Erfindungsgemäß greifen die parallelen Rohrabsehnitte (13a, 13b) des U-förmigen Schiebebügels (13) in feste Außenrohre (14) ein, die am Fahrgestell (11) angeordnet sind. Jedes Außenrohr ist mit ein oder zwei Lochreihen versehen, so daß in diese Löcher (18) Verriegelungselemente (19) eingreifen, die zur Ver- und Entriegelung mittels eines in den Rohrabschnitten (13a, 13b) in Längsrichtung verfahrbaren, von außen betätigbaren Schiebers (17) quer zu den Längsachsen der Rohrabschnitte (13a und 13b) bewegbar sind. Der Schieber (17) kann mit den Verriegelungselementen (19) durch einen Formschluß zwangsgekoppelt sein.

## Beschreibung

Die Erfindung bezieht sich auf einen Kinderwagen mit einem Fahrgestell und einem am Fahrgestell angeordneten, U-förmigen Schiebebügel. Der in Frage kommende Kinderwagen ist in mehreren Ausführungsformen allgemein bekannt. Unabhängig von der Ausführung ist jeder Kinderwagen mit einem Schiebebügel ausgestattet, der am Fahrgestell angeordnet ist und den die den Kinderwagen schiebende Person ergreift.

Damit Kinderwagen platzsparend transportiert werden können, ist der Kinderwagenaufsatz abnehmbar am Fahrgestell angeordnet und das Fahrgestell kann zusammengeklappt werden.

Bei vielen Ausführungen ist der U-förmige Schiebebügel noch mit Gelenken ausgestattet, damit er umgelegt werden kann, damit er gegenüber dem zusammengeklappten Fahrgestell nicht vorsteht.

Das die parallelen Schenkel verbindende Mittelteil, an dem der Schiebebügel normalerweise ergriffen wird, hat eine bestimmt Höhe vom Boden und auch einen bestimmten Versatz zur zugeordneten Achse des Kinderwagenfahrgestells.

Bei den bislang bekannten Kinderwagen läßt sich der Schiebebügel zwar einknicken, er ist jedoch hinsichtlich der Höhe und des Abstandes zur zugeordneten Radachse nicht einstellbar. Es ist deshalb auch schon bekannt, zur Anpassung an die unterschiedlichen Größen Griffe in einer entsprechenden Stellung auf den Schiebebügel aufzuklemmen. Dies ist jedoch ein zusätzlicher Aufwand.

Häufig wird ein Kinderwagen auch von mehreren Personen unterschiedlicher Größe gefahren. Es ist dann immer eine Neueinstellung der Handgriffe nötig. Außerdem wird die durch die Größe bedingte Schrittlänge ebenfalls nicht berücksichtigt.

Der Erfindung liegt die Aufgabe zugrunde, einen Kinderwagen der eingangs näher beschriebenen Art so zu gestalten, daß in konstruktiv einfacher Weise die Höhe des Mittelteils des U-förmigen Schiebebügels sowie die Lage gegenüber der zugehörigen Radachse auf die Körpergröße und auf die Schrittlänge einstellbar ist, und daß diese Einstellung jederzeit mit einem äußerst geringen Zeitaufwand durchgeführt werden kann.

Die gestellte Aufgabe wird gelöst, indem die parallelen Rohrabschnitte des U-förmigen Schiebebügels in am Fahrgestell angeordnete Außenrohre eingreifen, in denen jeweils mindestens eine Lochreihe vorgesehen ist, in deren Löcher Verriegelungselemente eingreifen, die zur Ver- und zur Entriegelung mittels in den Rohren in Längsrichtung verfahrbaren und von außen betätigbaren Schieber quer zu den Längsachsen der Rohre bewegbar sind.

Der Schiebebügel kann nunmehr gegenüber dem Fahrgestell bzw. der zugehörigen Radachse verschoben werden. Da das Außenrohr auch eines der Rohre des scherenartigen Untergestells sein kann und dieses schräg steht, verändert sich die Höhe, wenn der Schiebebügel gegenüber dem Außenrohr bzw. dem Fahrgestell verstellt wird. Beim Ausfahren des U-förmigen Schiebebügels vergrößert sich nicht nur die Höhe, sondern es vergrößert sich außerdem der Abstand zur zugehörigen Radachse, so daß auch durch die Verstellung verhindert wird, daß die den Kinderwagen schiebende Person gegen die Radachse tritt. Da die Verriegelungselemente in die jeweiligen Löcher der Außenrohre eingreifen, wird der Schiebebügel formschlüssig festgesetzt. Da durch die Verschiebung der Schieber in Längsrichtung die Verriegelungselemente quer zur Längsachse der Rohrabschnitte des Schiebebügels bzw. der Außenrohre verfahren werden und diese Schieber von außen betätigbar sind, läßt sich der Schiebebügel in äußerst kurzer Zeit in einfachster Weise verstellen. Außerdem werden für die Verriegelung nur wenige, einfache Bauteile verwendet, so daß die Konstruktion insgesamt kostengünstig ist.

Um einen besonders guten Formschluß zwischen den Löchern der Lochreihen der Außenrohre und den darin eingesteckten Rohren des U-förmigen Schiebebügels zu erzielen, ist in weiterer Ausgestaltung vorgesehen, daß in jedem Außenrohr zwei um einen Winkel von 180° versetzte Lochreihen vorgesehen sind, und daß in jedem Rohrabschnitt des U-förmigen Schiebebügels zwei quer zur Längsrichtung verfahrbare Verriegelungselemente angeordnet sind.

Zweckmäßigerweise sind dann die Verriegelungselemente Verriegelungsstifte, die in Federzungen eingesetzt sind, die in den Rohrabschnitten des Schiebebügels fest eingesetzt sind, und es sind den Federzungen Schrägflächen des Schiebers derart zugeordnet, daß die Verriegelungsstifte nach innen bzw. aufeinander zu bewegt werden, wenn der Bereich der Verriegelungsstifte außer Kontakt mit den Schrägfläehen kommt. Die Federzungen sind so ausgelegt, daß sie in der verriegelten Stellung bedingt durch die Schrägflächen des Schiebers nach außen gedrückt werden, so daß die Verriegelungsstifte in die Löcher des Außenrohres eingreifen. Dadurch werden in den Federzungen Rückstellkräfte aufgebaut, so daß beim entsprechenden Betätigen des Schiebers die Stifte aufeinander zu bewegt werden, wenn sie in den Bereich kommen, in dem die beiden Schrägflächen des Schiebers aufeinander zu laufen.

Da die Federzungen in Längsrichtung des Schiebers eine bestimmte Länge benötigen, damit die Federwirkung erzielt wird, ist vorgesehen, daß die Federzungen beider Rohrabschnitte des Schiebebügels an Ringen angesetzt sind, die in die freien Enden der Rohre des Schiebebügels fest eingesetzt sind und eine Durchbrechung für den Schieber aufweisen. Zur besseren und einfacheren Montage ist es dann zweckmäßig, wenn der Ring aus zwei Teilen besteht.

Anstelle der Federzungen können die Verriegelungselemente auch in einer Zwangsführung durch die Bewegung des Schiebers verfahren werden.

Da die Ringe in den Außenrohren geführt sind, können die beiden Teile jedes Ringes nach der Montage nicht mehr auseinanderfallen.

Damit die Schieber von außen betätigbar sind, ist vorgesehen, daß sie mit auf den parallelen Rohrabschnitten des U-förmigen Schiebebügels varfahrbaren Schiebehülsen verbunden sind und die Rohre in diesen Bereich Langlöcher aufweisen. Die Verbindung der Schiebehülsen mit den Schiebern erfolgt durch einen Stift, der innerhalb des Langloches dann verfahrbar ist. Dadurch werden außerdem die Endstellungen des Schiebers begrenzt.

Damit die Verriegelungsstifte nach dem Verfahren des U-förmigen Schiebebügels selbsttätig in die jeweiligen Löcher der Lochreihen gedrückt werden, ist vorgesehen, daß das der Schiebehülse abgewandte Ende des Schiebers einen Federteller aufweist und daß zwischen dem Federteller und den Federzungen eine Druckfeder angeordnet ist, die beim Verfahren der Schiebehülse bzw. des Schiebers zur Entriegelung der Verriegelungsstifte spannbar ist. Sobald die Freigabe des U-förmigen Schiebebügels durch die Verriegelungselemente erfolgt, kann der U-förmige Schiebebügel ein klein wenig verfahren werden. Sobald die nächsten Löcher der Außenrohre fluchtend zu den Verriegellungsstiften stehen, drücken die Druckfedern die Verriegelungsstifte dort hinein.

Die Druckfeder ist so ausgelegt, daß sie entspannt oder annähernd entspannt ist, wenn die Verriegelungsstifte in die Löcher eingreifen. Zur sicheren Führung der Federzungen und des damit einstückig verbundenen Führungsringes ist vorgesehen, daß sich an die Schrägflächen in Richtung zum Federteller ein Langloch anschließt, in dem die Federzungen und der zugehörige Führungsring geführt sind. Anstelle der Führungsstifte könnten auch gleichwertige Verriegelungselemente, beispielsweise Rastkugeln oder dergleichen verwendet werden.

Es kann auch auf federnde Elemente, wie beispielsweise Federzungen, verzichtet werden, wenn die Verriegelungselemente mit dem Schieber zwangsgeführt sind, indem eine formschlüssige Verbindung zwischen jedem Verriegelungselement und dem Schieber erzeugt wird. Dies läßt sich konstruktiv einfach umsetzen, wenn jedes Verriegelungselement einen mit dem Schieber zusammenwirkenden Führungsansatz aufweist, der mit wenigstens einer schräg zur Längsachse des Schiebers verlaufende Nut oder einen schräg zur Längsachse des Schiebers verlaufenden Steg aufweist, wobei in die Nut des Führungsansatzes ein Steg des Schiebers bzw. in die Nut des Schiebers ein Steg des Führungsansatzes eingreift. Bei Verfahren des Schiebers in Längsrichtung wären dann je nach Schieberichtung die Verriegelungselemente zur Mitte hin bewegt oder in die Öffnungen des Außenrohres gedrückt. Bei dieser Ausführung besteht jedes Verriegelungselement zweckmäßigerweise aus einem kreisrunden Verriegelungszapfen und einem klotzartigen Führungsansatz. Damit jedes Verriegelungselement mit dem Innenrohr verfahren werden kann, ist vorgesehen, daß jedes Verriegelungselement in einer vorzugsweise zweigeteilten Führungshülse angeordnet ist, die mit dem Innenrohr verfahrbar ist.

Anhand der beiliegenden Zeichnungen wird die Erfindung noch näher erläutert.

Es zeigen:
- Figur 1: einen als Sportwagen gestalteten Kinderwagen ohne Sitz- und Liegeeinsatz in einer Seitenansicht,
- Figur 2: den Schiebebügel des erfindungsgemäßen Kinderwagens als Einzelheit,
- Figur 3: den U-förmigen Schiebebügel im Längsschnitt,
- Figur 4: den die Verriegelungselemente enthaltenden Endbereich in einer gegenüber der Figur 3 vergrößerten Darstellung,
- Figur 5: den die Verriegelungselemente enthaltenden Endbereich in einer weiteren Ausführung,
- Figur 6: eine Ausführung, bei der die Verriegelungselemente zwangsgeführt sind,
- Figur 7: eine Einzelheit, eine Hälfte einer Führungshülse im Schnitt zeigend.

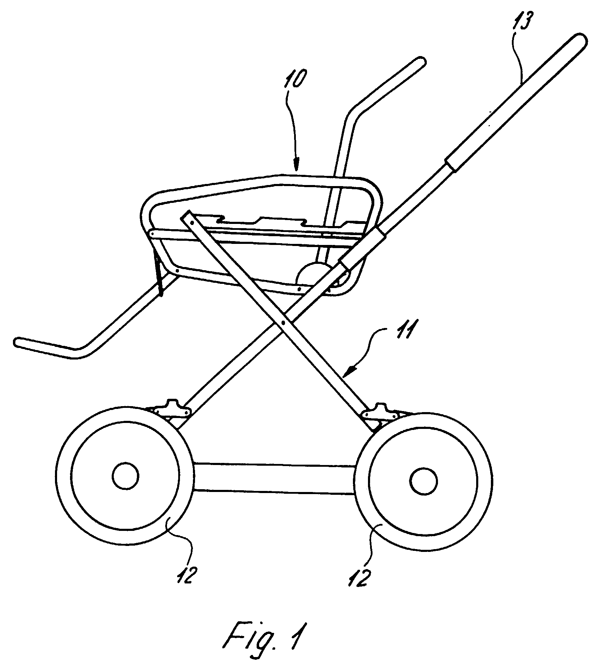

Der in der Figur 1 dargestellte Kinderwagen 10 besteht aus einem nicht näher erläuterten Fahrgestell 11, welches die Radachsen und die Laufräder 12 enthält. Das Fahrgestell 11 wird nicht näher erläutert, da es allgemein bekannt ist.

An das Fahrgestell 11 ist zum Schieben des Kinderwagens 10 ein U-förmiger Schiebebügel 13 angeordnet. Aus Gründen der vereinfachten Darstellung ist der Sitz- oder Liegeeinsatz des Kinderwagens 10 nicht dargestellt. Der Schiebebügel 13 ist aus einem Rohr gebogen.

Wie noch näher beschrieben, greifen die beiden parallelen Rohrabschnitte 13a und 13b in Außenrohre 14 ein, die am Fahrgestell 11 des Kinderwagens 10 angeordnet sind.

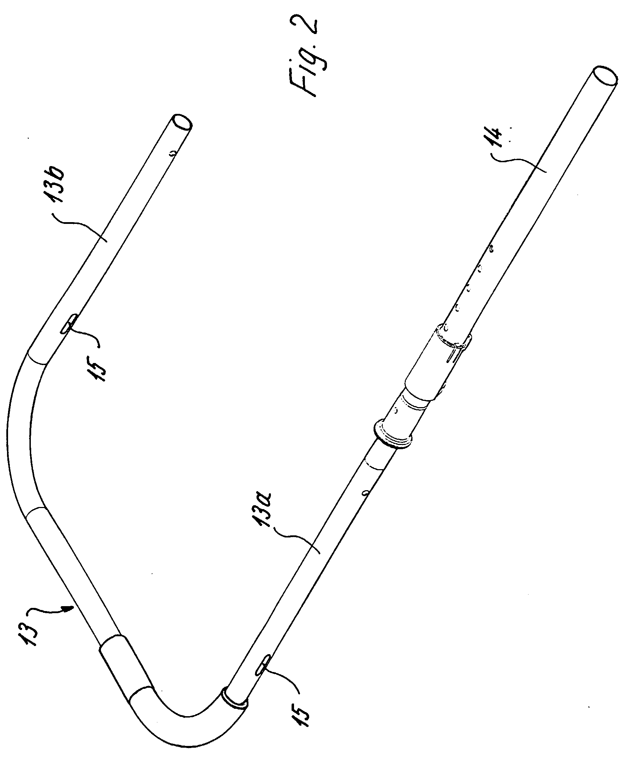

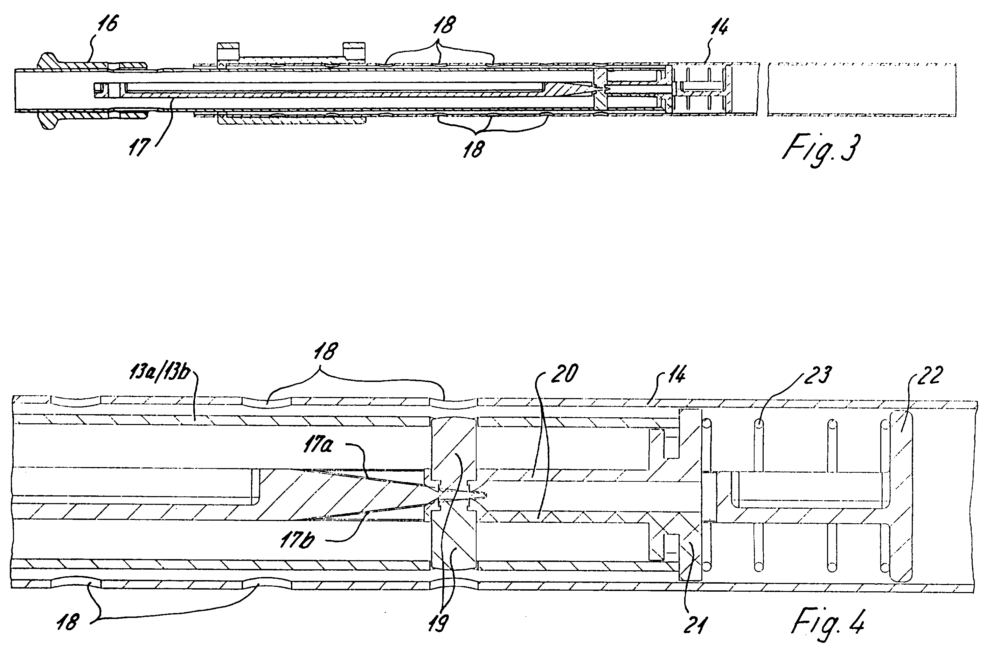

Zur Verdeutlichung ist in der Figur 2 nur eines der beiden Außenrohre 14 dargestellt. Im Anschluß an den Eckenschutz des Schiebebügels 14 ist in diesem Rohrabschnitt 13a, 13b ein Langloch 15 vorgesehen, in welches ein in der Figur 3 nicht dargestellter Stift geführt ist, um eine aus dem jeweiligen Rohrabschnitt 13a bzw. 13b aufgesetzte Schiebehülse 16 mit einem innerhalb des jeweiligen Rohrabschnittes 13a, 13b verfahrbaren, noch näher erläuterten Schieber 17 zu verbinden.

In jedem Außenrohr 14 sind zwei um einen Winkel von 180° zueinander versetzte Lochreihen vorgesehen, deren Löcher 18 im Abstand zueinander liegen. Jeder Rohrabschnitt 13a, 13b ist mit zwei einander gegenüberliegenden Bohrungen ausgestattet, in die Verriegelungselemente in Form von Verriegelungsstiften 19 eingreifen. Diese Verriegelungsstifte 19 sind in Federlaschen 20 fest eingesetzt. Diese Federlaschen 20 sind an halbkreisförmigen Ringen angeformt, die in ihrer Gesamtheit einen Führungsring 21 bilden, der im Außenrohr 14 geführt ist und fest mit dem der Schiebehülse 16 abgewandten Ende des jeweiligen Rohrabschnittes 13a, 13b verbunden ist. Dazu ist der Führungsring 21 mit einer nutartigen Aussparung versehen, in die ein Steg des jeweiligen Rohrabschnittes 13a, 13b eingreift.

Der Schieber 17 durchdringt den Führungsring 21 und ist außerdem an seinem äußeren, der Schiebehülse 16 abgewandten Seite mit einem Federteller 22 ausgestattet. Ein Ende einer Druckfeder 23 stützt sich an dem Federteller 22 und das andere Ende an dem Führungsring 21 ab.

Der Schieber 17 ist außerdem mit zwei einander gegenüberliegenden Schrägflächen 17a und 17b ausgestattet. An die Schrägflächen 17a, 17b schließt sich ein in Richtung zum Führungsring 21 gerichtetes Langloch an, in welches der Führungsring 21 und die Federlaschen 20 teilweise eingreifen.

Zur Verstellung des Schiebebügels 13 gegenüber dem Fahrgestell 11 bzw. den Außenrohren 14 werden zunächst die beiden Schiebehülsen 16 in Richtung zum mittleren Abschnitt des Schiebebügels 13 bewegt. Da der Schieber 17 im Synchronlauf mitgenommen wird, der Führungsring 21 jedoch fest steht, wird die Druckfeder 23 gespannt. Da die Federzungen 20 in der verriegelnden Stellung der Verriegelungsstifte 19 unter Spannung stehen, federn sie nach innen zurück, d. h. die Verriegelungsstifte 19 werden aufeinander zu bewegt und kommen außer Eingriff mit den Löchern 18 der Lochreihe der Außenrohre 14.

Der Schiebebügel 13 kann dann je nach Stellung aus den Außenrohren 14 herausgezogen oder hereingefahren werden. Sobald die Verriegelungsstifte 19 außerhalb der Löcher 18 liegen, können die Schiebehülsen 16 losgelassen werden.

Durch die Wirkung der Druckfeder 23 werden die Verriegelungsstifte 19 nach außen gedrückt, sobald sie fluchtend zu zwei Löchern 18 der Lochreihen stehen. Dadurch wird die Druckfeder 23 entspannt und die Federzungen 20 sind vorgespannt.

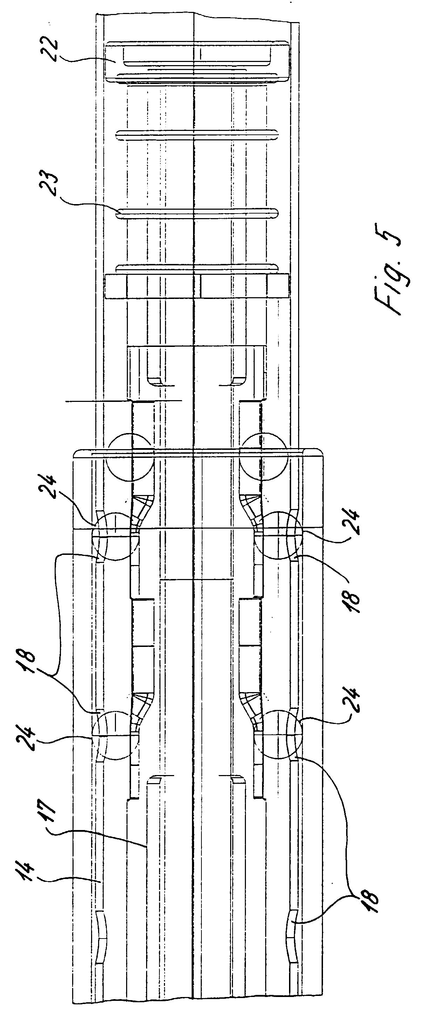

Die Ausführung nach der Figur 5 unterscheidet sich im wesentlichen dadurch, daß die Verriegelungstifte 19 durch Kugeln 24 ersetzt sind. Da diese nicht so formschlüssig in die Löcher 18 eingreifen, sind jeder Lochreihe zwei Kugeln zugeordnet. Auch der Schieber 17 ist mit entsprechenden Schrägflächen ausgestattet.

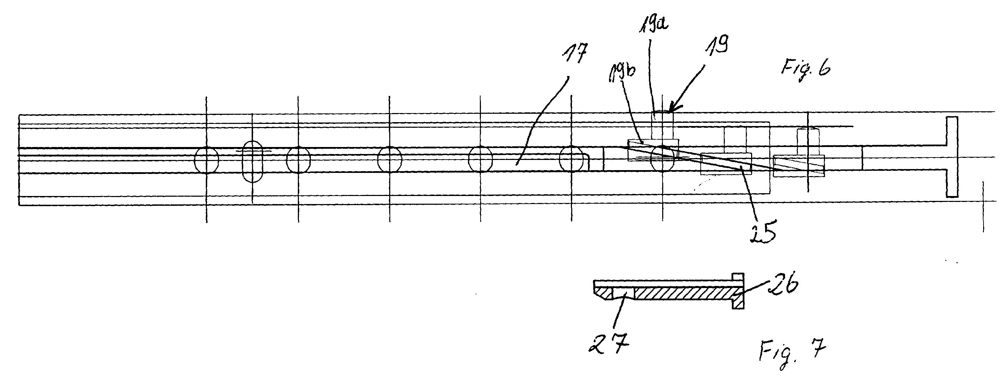

Die Figur 6 zeigt eine Ausführung, bei der der Schieber 17 formschlüssig mit den Verriegelungselementen 19 gekoppelt ist. Dazu besteht jedes Verriegelungselement aus einem Verriegelungszapfen 19a und einem Führungsansatz 19b, der klotzartig gestaltet ist. Der Führungsansatz 19b ist vorzugsweise an zwei einander gegenüberliegenden Seiten mit einer schräg verlaufenden Nut versehen, in die ein entsprechend schräg verlaufender Steg 25 des Schiebers 17 eingreift. Im darstellten Ausführungsbeispiel ist jedem Verriegelungselement 19 eine Hälfte einer Führungshülse 26 zugeordnet, wobei die beiden Hälften schließend in den Rohrabschnitten 13a, 13b geführt sind. Der Verriegelungszapfen 19a greift dabei in eine Bohrung 27 ein, die quer zur Längsachse steht. Diese Ausführung bietet aufgrund der Zwangsführung den Vorteil, daß auf federnde Elemente zum Bewegen der Verriegelungselemente 19 verzichtet werden kann. Die Nuten und Stege können auch umgekehrt angeordnet sein. Die Figur 6 zeigt, daß das Verriegelungselement 19 beim Verfahren des Schiebers 17 entweder außer Eingriff mit dem Außenrohr 14 kommt oder in das jeweilige Loch 18 gedrückt wird.

Die Erfindung ist nicht auf die dargestellten Ausführungsbeispiele beschränkt. Wesentlich ist, daß innerhalb jedes parallelen Rohrabschnittes 13a, 13b des Schiebebügels 13 ein verfahrbarer Schieber angeordnet ist, der von außen durch eine Schiebehülse 16 betätigbar ist und zur Entriegelung von Verriegelungselementen Schrägflächen 17a oder 17b aufweist oder daß der Schieber 17 mit den Verriegelungselementen 19 zwangsgekoppelt ist durch entsprechend schräg stehende Nuten und Stege 25.

## Patentansprüche

1. Kinderwagen mit einem Fahrgestell und einem am Fahrgestell angeordneten U-förmigen Schiebebügel, **dadurch gekennzeichnet,** daß die parallelen Rohrabschnitte (13a, 13b) des U-förmigen Schiebebügels (13) in am Fahrgestell (11) angeordnete Außenrohre (14) eingreifen, in denen jeweils mindestens eine Lochreihe vorgesehen ist, in deren Löcher (18) Verriegelungselemente (19) eingreifen, die zur Ver- und Entriegelung mittels eines in den Rohrabschnitten (13a, 13b) in Längsrichtung verfahrbaren, von außen beträtigbaren Schiebers (17) quer zu den Längsachsen der Rohrabschnitte (13a, 13b) bewegbar sind.

2. Kinderwagen nach Anspruch 1, **dadurch gekennzeichnet,** daß in jedem Rohrabschnitt (13a, 13b) des Schiebebügels (13) zwei um einen Winkel von 180° zueinander versetzte Lochreihen vorgesehen sind.

3. Kinderwagen nach Anspruch 1 oder 2, **dadurch gekennzeichnet,** daß die Verriegelungselemente Verriegelungsstifte (19) sind, die in Federzungen (20) eingesetzt sind und fest mit den Rohrabschnitten (13a, 13b) des Schiebebügels (13) verbunden sind, und daß den Federzungen (20) Schrägflächen (17a, 17b) des Schiebers (17) derart zugeordnet sind, daß die Verriegelungsstifte (19) in und außer Eingriff mit den Löchern (18) der Lochreihen gelangen.

4. Kinderwagen nach Anspruch 3, **dadurch gekennzeichnet**, daß die Federzungen (20) an einem Führungsring (21) angesetzt sind, der in das freie Ende der Rohrabschnitte (13a, 13b) des Schiebebügels (13) fest eingesetzt ist und der eine Durchbrechung für den Schieber (17) aufweist.

5. Kinderwagen nach Anspruch 4, **dadurch gekennzeichnet**, daß der Führungsring (21) aus zwei Teilen besteht.

6. Kinderwagen nach einem oder mehreren der vorhergehenden Ansprüche 1-5, **dadurch gekennzeichnet**, daß jeder Schieber mit auf den parallelen Rohrabschnitten (13a, 13b) des U-förmigen Schiebebügels (13) verfahrbare Schiebehülse (16) verbunden ist und jeder Rohrabschnitt in diesem Bereich ein Langloch (15) aufweist.

7. Kinderwagen nach einem oder mehreren der vorhergehenden Ansprüche 1-6, **dadurch gekennzeichnet**, daß das der Schiebehülse (16) abgewandte Ende des Schiebers (17) einen Federteller (22) aufweist, und daß zwischen dem Federteller (22) und dem Führungsring (21) eine Druckfeder (23) angeordnet ist, die beim Verfahren der Schiebehülse (16) zur Entriegelung der Verriegelungstifte (19) spannbar ist.

8. Kinderwagen nach einem oder mehreren der vorhergehenden Ansprüche 1-7, **dadurch gekennzeichnet**, daß jeder Schieber (17) ein sich von seinen Schrägflächen (17a, 17b) erstreckendes Langloch aufweist, in denen der Führungsring (21) und die Federzungen (20) geführt sind.

9. Kinderwagen nach einem oder mehreren der vorhergehenden Ansprüche 1-8, **dadurch gekennzeichnet**, daß die Verriegelungselemente in einer Zwangsführung entsprechend der Bewegung des Schiebers (17) quer dazu verfahrbar sind.

10. Kinderwagen nach einem oder mehreren der vorhergehenden Ansprüche 1-9, **dadurch gekennzeichnet**, daß die Verriegelungselemente Kugeln (24) sind, die vorzugsweise jeder Lochreihe paarweise zugeordnet sind.

11. Kinderwagen nach Anspruch 10, **dadurch gekennzeichnet**, **daß** jedes Verriegelungselement (19) einen mit dem Schieber (17) zusammenwirkenden Führungsansatz (19b) aufweist, der mit wenigstens einer schräg zur Längsachse des Schiebers (17) verlaufenden Nut oder einen schräg zur Längsachse des Schiebers verlaufenden Steg aufweist, wobei in die Nut des Führungsansatzes (19b) ein Steg (25) des Schiebers (17) bzw. in die Nut des Schiebers (17) ein Steg des Führungsansatzes (19b) eingreift.

12. Kinderwagen nach Anspruch 10 oder 11, **dadurch gekennzeichnet, daß** jedes Verriegelungselement aus einem kreisrunden Verriegelungszapfen (19a) und einem klotzartigen Führungsansatz (19b) besteht, und daß jedes Verriegelungselement (19) in einer vorzugsweise zweigeteilten Führungshülse (26) angeordnet ist, die mit dem Innenrohr (13) verfahrbar ist.
